Europäisches Patentamt

European Patent Office

Office européen des brevets

(11) Veröffentlichungsnummer: **0 047 790**
**B1**

# EUROPÄISCHE PATENTSCHRIFT

(45) Veröffentlichungstag der Patentschrift:
**08.05.85**

(51) Int. Cl.⁴: **F 16 K 31/42**

(21) Anmeldenummer **80105428.9**

(22) Anmeldetag· **11.09.80**

(54) **Vorgesteuertes Magnetventil.**

(43) Veröffentlichungstag der Anmeldung:
**24.03.82 Patentblatt 82/12**

(45) Bekanntmachung des Hinweises auf die Patenterteilung:
**08.05.85 Patentblatt 85/19**

(84) Benannte Vertragsstaaten:
**CH DE FR GB IT LI SE**

(56) Entgegenhaltungen:
CH - A - 355 995
DE - B - 1 066 828
DE - B - 2 341 858
DE - C - 1 046 455
FR - A - 1 019 658
FR - A - 2 359 348
US - A - 2 870 986
US - A - 3 240 128
US - A - 3 362 679
US - A - 3 372 899

(73) Patentinhaber: **Bürkert GmbH,
Postfach 20 Lipfersberger Strasse 1, D-7118 Ingelfingen
(DE)**

(72) Erfinder: **Dettmann, Heinrich, Vogtherr-Strasse 4,
D-7119 Niedernhall (DE)**
Erfinder: **Göttel, Otto, Obere Klebstrasse 7,
D-7118 Ingelfingen (DE)**

(74) Vertreter: **Bunke, Max, Dipl.-Ing. et al, Patentanwälte
Prinz, Bunke & Partner Lessingstrasse 9,
D-7000 Stuttgart 1 (DE)**

**Beschreibung**

Die Erfindung betrifft ein elektromagnetisch vorgesteuertes Ventil mit einer bei geschlossenem Ventil im wesentlichen ebenen, elastomeren Membran als Stellglied und Schließorgan für den Ventilhauptsitz, die in einem Abstand von ihrem Rand zwischen von Gehäuseteilen gebildeten Kanten kippbar gehalten ist, und auf deren dem Magnetantrieb zugewendeten, dem Ventilhauptsitz abgewandten Seite ein Stützteiler angeordnet ist.

Derartige Ventile sind z. B. aus der US-A-3 240 128 bekannt. Diese bekannte Bauart ist nur für einen begrenzten Hubraum geeignet; wegen der fehlenden Einspannung des ebenen Membranrandes besteht die Gefahr des Herausziehens der Membran aus der Ringnut zwischen Gehäuse und Deckel. Insbesondere bei einer Umkehr des öffnenden Druckgefälles an der Membran, wenn also oberhalb der Membran höherer Druck herrscht als unterhalb dieser, wie er z. B. bei einem plötzlichen Druckabfall vor dem Ventil zustandekommen kann, kann die Membran in Sitzrichtung aus ihrer Aufnahmenut herausgezogen werden. Um das zu verhindern, ist bei der bekannten Ausführung ein Stützteller unterhalb der Membran notwendig, der gelocht ausgeführt werden muß und zusätzlichen fertigungstechnischen Aufwand erfordert.

Es sind auch Ventile mit eingespannten gewölbten Membranen bekannt, ferner solche, bei denen der äußere Rand einer ebenen Membran mit axialem und radialem Spiel gegenüber Ventilgehäuse und Deckel ausgeführt ist und die Membran lose zwischen das Gehäuse und den Deckel eingelegt ist. Bei diesen bekannten Ausführungen ergeben sich folgende Schwierigkeiten.

Eingespannte gewölbte Membranen, wie sie z. B. aus der FR-A-2 359 348 (Figur 1) bekannt sind, ermöglichen zwar relativ große Hübe, erfordern jedoch hohe Stellkräfte, die durch entsprechend hohe Durckdifferenzen an der Membran aufgebracht werden müssen, wenn das Ventil geöffnet werden soll. Das beruht auf einer relativ hohen Federrate der Axialbewegung solcher Membranen. Dementsprechend haben vorgesteuerte Magnetventile mit derartigen Membranen einen relativ hohen Mindestdruckabfall am Ventil, wenn der Ventilsitz durch den vollen Hub des Magnetsystems voll geöffnet werden soll. Solche Membranen erfordern wegen ihrer komplizierten gewölbten Form auch einen hohen Fertigungsaufwand, insbesondere deswegen, weil die richtige Abstandsdifferenz zwischen Sitzebene und Membranbefestigungsebene gewährleistet werden muß. Im Bereich niedriger Temperaturen zeigen solche Membranen ein ungünstiges Stellverhalten: infolge der mit sinkender Temperatur abnehmenden Elastizität des elastomeren Werkstoffes erhöht sich die wegen der gewölbten Ausführung ohnehin relativ hohe Federrate der Axialbewegung mit sinkender Temperatur sehr stark. Dünnwandige Ausbildungen solcher Membranen würden die Lebensdauer solcher Membransysteme so sehr verkürzen, daß dieser Weg zur Verkleinerung der Federrate nicht beschritten werden kann. Die Sitzdichtheit von Ventilen mit gewölbten Membranen weist in der Regel große Schwankungen auf, weil die axiale Federrate solcher Membranen stark streut und, wenn zum Öffnen der Ventile kleine Mindestdifferenzdrücke genügen sollen, keine großen Federschließkräfte auf die Membran aufgebracht werden dürfen. Gewölbte Membranen haben gegenüber ihrer hohen axialen Federrate ferner nur kleine radiale Federraten; aus diesem Grunde ist bei mit solchen Membranen arbeitenden Magnetventilen ein Membranführungsstern notwendig, der die Axialbewegung der Membran radial im Ventilsitzdurchmesser führt. Ein solcher Führungsstern verursacht zusätzliche Herstellkosten und verringert den Durchflußwert des Ventils.

Ebenfalls bekannte, ebene, außen eingespannte Membranen wie nach der US-A-3 362 679 weisen gegenüber gewölbten, eingespannten Membranen wesentlich kleinere Hübe auf, so daß sie wegen der dadurch bedingten Durchflußverminderung keine befriedigende Alternative zur Verwendung gewölbter Membranen bilden.

Der Erfindung liegt die Aufgabe zugrunde, bei einem Ventil der eingangs genannten Gattung mit kleiner Federrate der Axialbewegung der Membran auszukommen und so einen großen Hub und entsprechend großer Durchfluß bei kleiner Stellkraft zu erzielen, andererseits aber zugleich eine gegen unzulässige Radialbewegungen der Membran sichernde, große radiale Federrate zu verwirklichen. Die Membran sollte einfach ausgebildet und kostengünstig herstellbar sein. Der Einfluß der Temperatur auf die axiale Bewegungsfähigkeit der Membran sollte vermindert werden; auch bei kleiner Druckdifferenz am Ventil sollte die Sicherheit der Betätigung gewährleistet bleiben und die Gefahr des Herausziehens der Membran aus ihrer Halterung sollte sicher vermieden werden; es sollte eine möglichst gleichbleibende, zuverlässige Sitzdichtheit erzielt werden.

Die Lösung dieser Aufgabe liegt gemäß der Erfindung darin, daß bei einem Ventil der genannten Art die ebene Membran eine Randwulst aufweist, daß diese auf der dem Ventilhauptsitz abgewandten Seite aus der Membran im Querschnitt einen Winkel bildend einseitig herausragt und in einer zwischen einem Ventilgehäuse und einem Ventilgehäusedeckel gebildeten, von einem ringsum laufenden Deckelsteg bis auf die Membrandicke mit Spiel verschlossenen Ringnut ohne Flächenpressung aufgenommen ist, wobei der Deckelsteg und die ihm gegenüberliegende Ringnutkante im Zusammenwirken mit Randbereichen der unter Krafteinwirkung nach der einen oder anderen Seite hin ausgebogenen Membran als Dichtkanten benutzt sind, daß der Außendurchmesser der Ringnut um einen einen Abstandsspalt gegenüber dem Außendurchmesser der Randwulst der Membran ergebenden Betrag größer ist, als der letztere, daß der Innendurchmesser der Randwulst bei gestreckter Membran um einen Arbeitsweg größer ist, als der Außendurchmesser des Deckelstegs und daß der Boden der Ringnut unter einem spitzen Winkel nach außen geneigt ist.

Bei einem Ventil anderer Gattung war aus der US-A-3 372 899 eine im wesentlichen ebene Membran mit einseitig oder nach beiden Seiten aus dieser herausragender, eingespannter Randwulst bekannt. Die Membran ist hier nur Stellglied, nicht zugleich Schließorgan. Die Vorsteuerung wird über ein Funksignal bewirkt, das über ein Relais einen »Wärmemotor«, nämlich ein Element steuert, das unter durch elektrischen Strom bewirkter Erwärmung durch Formänderung einen Vorsteuersitz schließt. Im Gegensatz zur vorliegenden Erfindung wird hier die Membran in beiden Schaltstellungen des Ventils mit einer Druckdifferenz belastet. Der besondere Ventilschließkörper weist Führungsrippen auf.

Die mit der Erfindung erzielten Vorteile entsprechen der Aufgabenstellung; die geringe axiale Federrate ermöglicht auch bei niedrigem Druckgefälle am Ventil Rückdruckdichtheit und gute Dichtheitswerte; die hohe Geschmeidigkeit der Membran in axialer Richtung hat zur Folge, daß zur Sicherung der Schließstellung des Ventils eine schwache Feder ausreicht. Bei mit dem Magnetanker gekoppelten Membransystemen läßt sich daher mit kleineren Magnetkräften auskommen, als bei Verwendung von Membranen mit größeren axialen Federraten. Dies ist bei solchen Ventilen deshalb besonders vorteilhaft, weil sie anders als Ventile ohne Koppelung des Membransystems mit dem Magnetanker für Nenndrücke ab Null bar gebaut werden, so daß bei drucklosem Zustand des Ventils der Hubmagnet das Membransystem über den vollen Hub bewegen muß, ohne von einer durch eine Druckdifferenz am Ventil erzeugten, an der Membran angreifenden Kraft unterstützt zu werden. Da die erfindungsgemäß ausgebildete und angeordnete Membran nur eine verhältnismäßig kleine Verformungsarbeit erfordert, erhöht sich auch ihre Lebensdauer gegenüber der Verwendung von eine größere Verformungsarbeit erfordernden Membranen, bei denen mit zunehmenden Schaltspielzahlen die Lebensdauer durch Materialermüdung verkürzt wird. Der spitzwinklig geneigte Boden der Ringnut trägt zu der relativ freien axialen Beweglichkeit der Membran bei und vermindert den Grad der Membranverformung beim Öffnen des Ventils, während der Stützteller die radiale Steifigkeit der Membran erhöht.

Die hohe radiale Federrate zentriert die Membran radial, so daß die Schaltbewegung keinen Reibarbeit verbrauchenden Führungsstern der Membran erfordert, wie er bei gewölbt ausgeführten Membranen notwendig ist. Der Wegfall des Führungssterns verbilligt die Herstellung.

Auch ein unterer Abstützteller für die Membran bleibt entbehrlich.

Die erfindungsgemäße Ausbildung und Anordnung der Membran macht ihre Funktionssicherheit auch weniger empfindlich gegen Toleranzschwankungen in den Abmessungen, insbesondere hinsichtlich der Membrandicke und des Membrandurchmessers. Da somit keine besonders hohen Toleranzen gefordert zu werden brauchen, wie es bei gewölbten Membranen erforderlich ist, lassen sich, wie unten näher ausgeführt, einfache und billige Herstellungsverfahren verwenden, ohne daß die richtige Funktion der Membranen aus unterschiedlichen Werkstoffen in einem Ventil gefährdet würde.

Eine Weiterbildung der Erfindung liegt darin, daß die Membran auf der Schließseite mit einem Dämpfungskegel ausgerüstet ist, der in der Endphase des Schließvorganges drosselnd wirkt. Die Vorsteuerbohrungen in der Membran werden dabei möglichst dicht an den Ventilsitz gelegt, um während des Schließens im Bereich niedriger Strömungsdrücke zu liegen; der Druckaufbau oberhalb der Membran auf den Wert des Druckes unterhalb der Membran läuft dann zeitlich verzögert ab. Auch die durch die geringe axiale Federrate der Membran ermöglichte schwache Schließfeder des Systems wirkt in Verbindung mit der Anordnung des Dämpfungskegels dämpfend auf die Ausbildung von Druckstößen während des Schließens.

Eine Weiterbildung der Erfindung liegt schließlich noch darin, daß eine durch Aufvulkanisieren einer Gewebebahn auf den gummielastischen Werkstoff der Membran erhaltene gewebeverstärkte Membran verwendet wird; die Lebensdauer wird durch diese Maßnahme weiter erhöht.

In der Zeichnung zeigen

Fig. 1 in einem Teilschnitt die erfindungsgemäße Ausbildung der Membran und der mit ihr verbundenen Teile und ihre Anordnung zwischen Ventilgehäuse und Gehäusedeckel,

Fig. 2 eine Einzelheit,

Fig. 3 eine Teildarstellung der Membranlage bei geöffnetem Ventil,

Fig. 4 eine gegenüber Fig. 1 vervollständigte Schnittdarstellung, deren linke Seite die Stellung der Teile bei geschlossenem Ventil und deren rechte Seite die Stellung der Teile bei geöffnetem Ventil zeigt,

Fig. 5 einen Schnitt durch ein erstes Anwendungsbeispiel, nämlich bei einem mit dem erfindungsgemäßem Membransystem ausgerüsteten, vorgesteuerten Magnetventil ohne Kupplung des Magnetankers mit der Membran und

Fig. 6 einen der Fig. 5 entsprechenden Schnitt durch ein zweites Anwendungsbeispiel, nämlich bei einem ebenfalls vorgesteuerten, aber mit Zwangsanhebung der Membran durch den mechanisch angekoppelten Magnetanker ausgerüsteten Magnetventil.

In dem Ventilgehäuse 21, das einen Eintrittsstutzen 1 und einen Austrittsstutzen 6 aufweist, ist der zylindrische Ventilsitz 22 gebildet. Auf das Ventilgehäuse 21 ist ein Gehäusedeckel 23 unter Zwischenlage eines Dichtungsringes, z. B. eines O-Ringes 24 aufgesetzt. Zwischen dem Gehäuse 21 und dem Deckel 23 ist eine Ringnut 25 gebildet, die den Rand der Membran 26 aufnimmt. Zur Bildung der Ringnut ist im Gehäuse 21 eine Schulter 27 vorgesehen, die den Boden der Ringnut bildet und unter einem spitzen Winkel $\alpha$ zur zylindrischen Ventilgehäusewand geneigt ist. Der Boden der Ringnut 25 verläuft also kegelstumpfförmig. Die Vorderkante der Schulter 27 bildet eine ringförmige Dichtungskante 28, die zweckmäßig abgerundet ist. In die die Schulter 27 bildende Ausnehmung des Gehäuses 21 greift ein Ansatz 29 des Deckels 23 ein. Der Deckelansatz 29 bildet auf seiner Innenseite einen ringsum laufenden Steg 30, der die Ringnut 25 bis auf einen der Membrandicke mit zusätzlichem Spiel entsprechenden Spalt verschließt. Der Deckelsteg 30 ist an seinem unteren Ende ebenfalls abgerundet; er bildet dort eine zweite ringförmige Dichtkante.

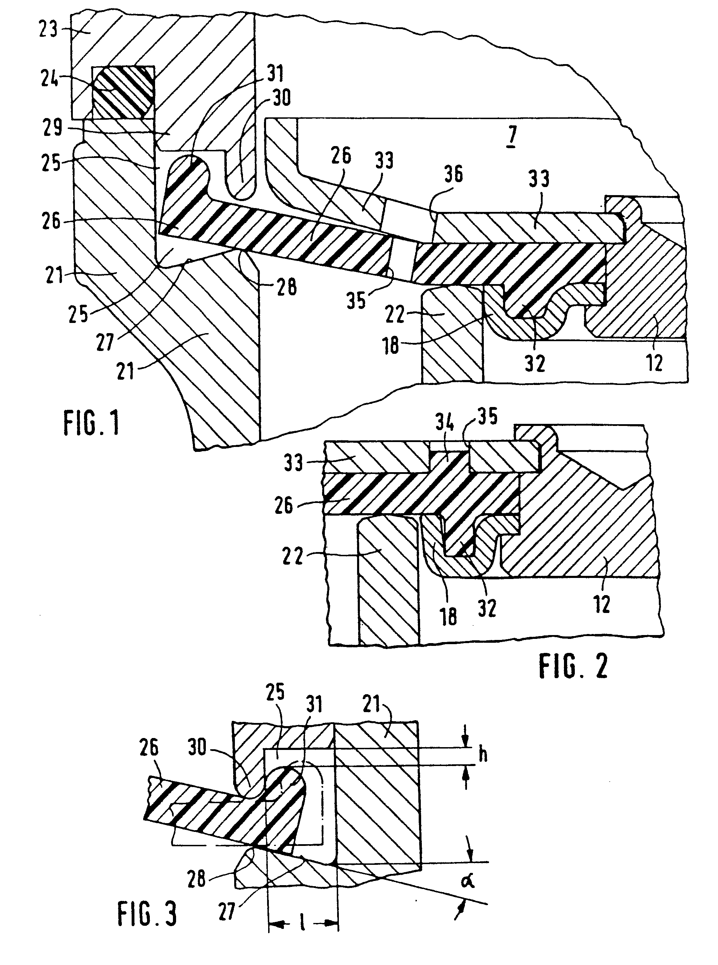

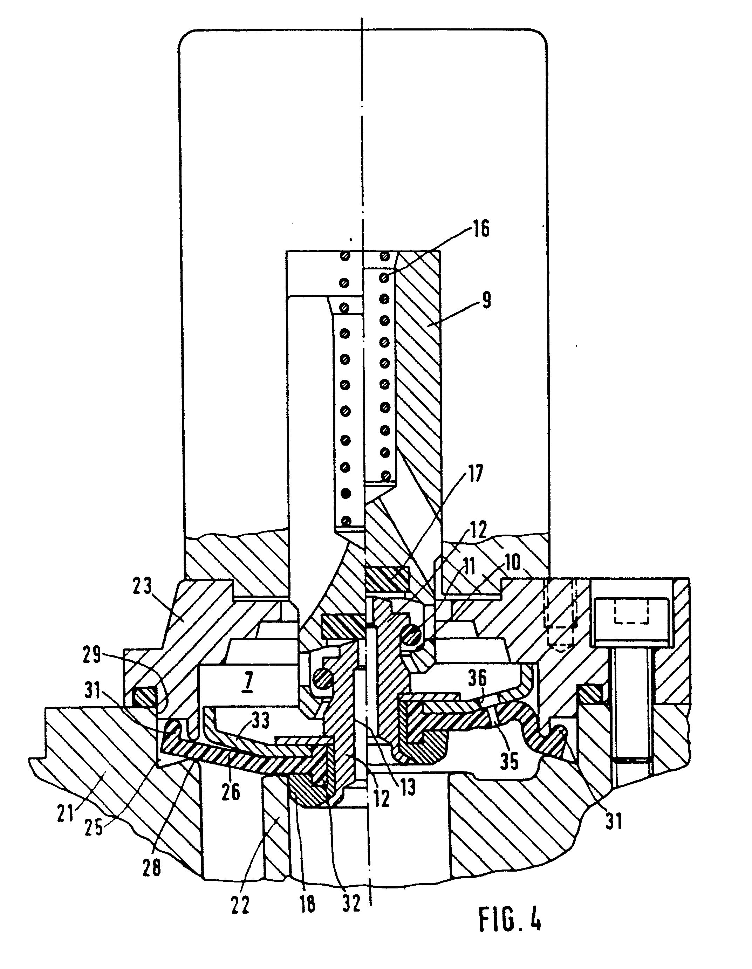

Die Membran 26 bildet an ihrem Umfang eine Randwulst 31, die aus der im übrigen im wesentlichen ebenen Membran einseitig herausragt, so daß der Membranrand im Querschnitt ein Winkelprofil bildet, dessen Oberkante abgerundet ist. Der flache Teil des Randbereichs der Membran geht zwischen der Dichtkante 28 und dem Steg 30 hindurch, so daß die Randwulst 31 in der Ringnut 25 liegt. Bei der in Fig. 1 dargestellten geschlossenen Lage des Ventils liegt die Membran 26 auf der unteren Dichtkante 28 auf, während gegenüber der abgerundeten Kante des Steges 30 Spiel bleibt. In ihrem mittleren Teil weist die Membran 26 eine untere, innere Ringwulst 32 auf, auf die ein in den Durchmesser des Sitzes 22 passender Dämpfungskegel 18 aufgesetzt ist. Auf der Oberseite der Membran 26 befindet sich ein Stützteller 33. Die Membran 26, der Stützteller 33 und der Dämpfungskegel 18 sind durch einen mittleren Nietbolzen 12 zu einer Einheit, einem Membransystem zusammengefaßt. Die Membran 26 greift mit einer zur Zentrierung und als Verdrehsicherung dienenden Warze 34 in eine Durchbrechung 34' des Stütztellers 33 ein. Je nach dem Anwendungsfall gehen durch die Membran 26 und den Stützteller 33 noch Vorsteuerbohrungen 35 bzw. 36 hindurch. Der Außendurchmesser der Ringnut 25 ist um einen Abstandsspalt gegenüber dem Außendurchmesser der Randwulst 31 der Membran 26 ergebenden Betrag größer, als der letztere. In der in Fig. 1 gezeichneten Schließstellung behält daher die äußere Randwulst 31 der Membran in der Ringnut 25 sowohl radiales als auch axiales Spiel. In einer äußersten Öffnungsstellung (Fig. 3) wirkt die Randwulst 31 als Sicherung gegen Herausziehen der Membran aus der Ringnut, wobei sie dichtend sowohl auf dem Boden der Ringnut, nämlich der Schulterfläche 27 aufliegt, als auch an dem eine obere Dichtkante bildenden Steg 30 anliegt. Man sieht, daß die Membran ihre für die Offenstellung erforderliche Schrägstellung einnehmen kann, ohne daß es zu ausgeprägten radialen Spannungen und Verformungen am Membranrand kommen kann. Die freie Bewegungshöhe h der Randwulst 31 in der Ringnut 25 entspricht etwa dem Wert 1 x tg ı, worin 1 die Breite der Ringnut 25, zugleich der maximale Wert der freien Länge des Membranrandes zwischen dem Steg 30 und dem Außenrand der Membran zwischen allen möglichen Offen- und Schließstellungen, vermehrt um ein Umfangsspiel, ist und wobei $\alpha$ in Abhängigkeit von dem Hub und den Durchmesserverhältnissen der jeweiligen Membran gewählt wird. Es kann also bei keinem Schaltzustand zu einer Verspannung zwischen dem Membranrand und der Zylinderfläche der Ringnut im Ventilgehäuse kommen.

Die Membran 26 läßt sich in einheitlichen Preß- oder Spritzformen aus unterschiedlichen Werkstoffen, wie Butadien-Acrylnitril-Copolymerisaten, wie sie unter dem Warenzeichen »Perbunan« auf dem Markt sind, oder aus vulkanisierbaren Fluorelastomeren (unter dem Warenzeichen »Viton« auf dem Markt) oder EPDM, nämlich vulkanisierbaren ungesättigten Äthylen-Propylen-Kautschuken herstellen.

Zur Erhöhung ihrer Lebensdauer läßt sich die Membran 26 mit einer Gewebeverstärkung versehen, was wegen der ebenen Ausbildung der Membran durch Aufvulkanisieren einer geeigneten Gewebebahn verhältnismäßig einfach zu verwirklichen ist. Eine solche verstärkte Membran ist auch für höhere größte Betriebsdrücke geeignet, als eine nicht verstärkte.

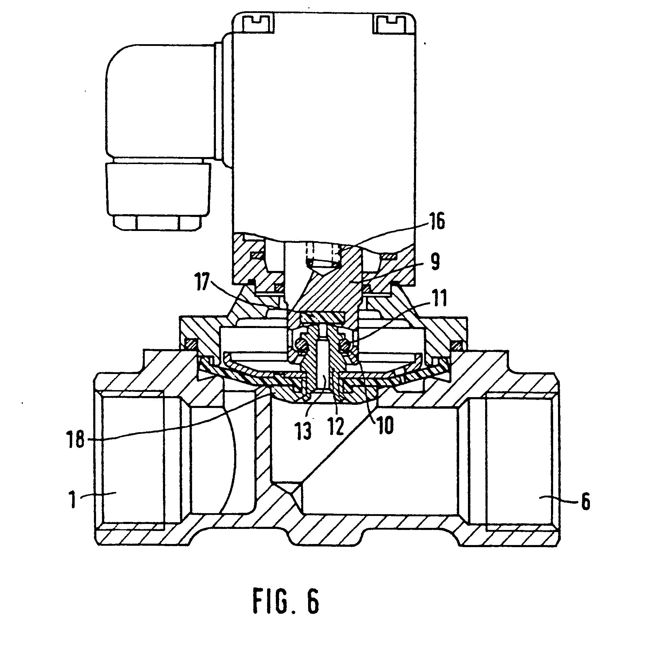

Die Bauart nach Fig. 4 entspricht dem Anwendungsbeispiel nach Fig. 6 bei einem vorgesteuerten Ventil mit magnetischer Zwangsanhebung, bei dem der Magnetkern 9 und das Membransystem des Ventils über dessen Nietbolzen 12 mechanisch miteinander gekoppelt sind. Bei solchen Ventilen sind keine Mindestdruckdifferenzen am Ventil nötig, um das Öffnen sicherzustellen, vielmehr können diese Ventile auch im drucklosen Zustand durch Zwangsanhebung des Membransystems geöffnet werden. Zu diesem Zweck hat bei dem gezeichneten Beispiel der Magnetkern 9 eine innere Hinterdrehung 10, die die vom Magnet ausgeübte Hubkraft bei der nach oben erfolgenden Öffnungsbewegung über einen O-Ring 11 auf den mittleren Nietbolzen 12 überträgt. Dieser Bolzen 12 enthält eine Axialbohrung 13, die einen Vorsteuerkanal darstellt. Durch sie ist sichergestellt, daß auch bei drucklosem Zustand des Ventils der Magnetkern 9 das Membransystem in die Offenstellung zieht. Das Magnetsystem wird entsprechend leistungsfähig ausgelegt. Wie beim Öffnen, wirkt der Magnetkern wegen seiner mechanischen Koppelung mit der Membraneinheit auch in Richtung des Schließens; die Schließfeder 16 drückt nach Abschalten des Magnetstromes mit ihrer Vorspannung über eine Vorsteuerdichtung 17 auf den Nietbolzen 12 und damit auf das Membransystem und führt zum Schließen des Ventils.

Durch das Schließen der Vorsteuerbohrung baut sich bei druckbeaufschlagtem Zustand des Ventils oberhalb der Membran 26 wieder der vol le Vordruck P1 auf, der eine schließende hydraulische Kraft ergibt. Bei drucklosem Zustand des Ventils reicht die Vorspannkraft der Feder 16 aus, um das Ventil ohne Unterstützung durch eine hydraulische Schließkraft zu schließen.

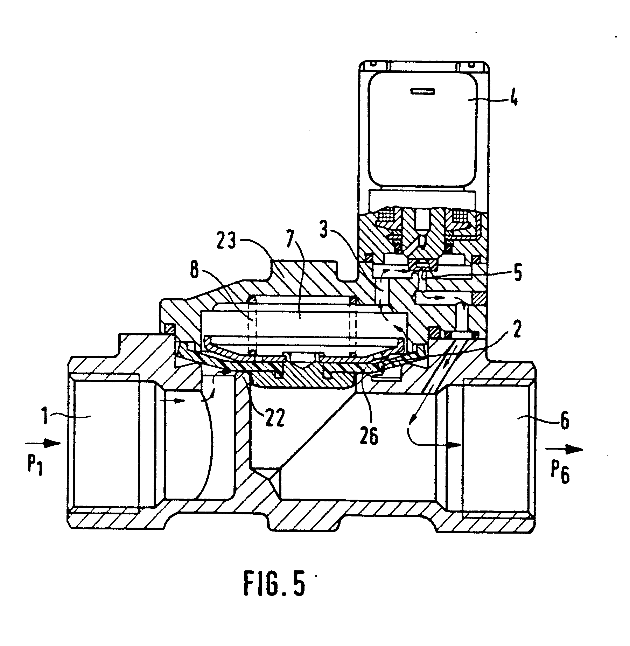

Bei dem Anwendungsbeispiel nach Fig. 5 weist das vorgesteuerte Magnetventil ein besonderes Vorsteuerventil 4 mit einem Vorsteuerventilsatz 5 auf. Bei offenem Vorsteuerventil strömt Medium von dem Eintrittsstutzen 1 aus durch einen in der Membran 26 vorgesehenen Vorsteuerkanal 2 und durch einen Vorsteuerkanal 3 im Ventildeckel 23 durch den Vorsteuerventilsitz 5 und daran anschließende Kanäle im Deckel 23 und im Gehäuse 21 in den Ausgangsstutzen 6 des Ventilgehäuses. Durch diese Strömung bildet sich oberhalb der Membran 26 im Raum 7 ein Druck aus, der wie bei dem beschriebenen Beispiel nach Fig. 4 und 6 zwischen dem Vordruck P1 und dem Gegendruck P6 liegt, so daß bei entsprechender Wahl der Flächenverhältnisse an der Membran 26 eine vom Ventilsitz abhebende Kraft entsteht, so daß der Ventilhauptsitz 22 geöffnet wird. Hierfür muß jedoch die Druckdifferenz P1−P6 am Ventil eine gewisse Mindestgröße haben. Sie beträgt bei Ventilen dieser Art in der Regel zwischen etwa 0,2 bis 0,5 bar. Wenn keine solche Mindestdruckdifferenz am Ventil besteht, bleibt der Hauptsitz 22 durch die Membran 26 auch dann geschlossen, wenn das Vorsteuerventil 4 geöffnet ist. Das Schließen des Hauptsitzes 22 des Ventils wird aus der Offenstellung heraus durch das Schließen des Vorsteuerventils 4 eingeleitet. Wenn der Vorsteuerventilsitz 5 geschlossen wird, baut sich im Druckraum 7 über der Membran 26 der gleiche Druck P1 wie vor dem Ventil auf. Dadurch entsteht eine Schließkraft in Gestalt der über die Fläche des Ventilsitzes 22 an der inneren Membranfläche angreifenden Druckdifferenz P1−P6. An der Kreisringfläche der Membran 26 außerhalb des Ventilsitzes 22 herrscht Kraftgleichgewicht, weil sich oberhalb und unterhalb der Membran 26 derselbe Druck P1 ausbildet. Die Schließwirkung wird durch die Vorspannkraft einer Hauptventilschließfeder 8 noch erhöht; diese Feder 8 dient im wesentlichen dazu, auch bei sehr kleinen Druckdifferenzen und Druckhöhen die Dichtheit am Ventilhauptsitz zu gewährleisten.

Während des Schließens eines durchströmten Ventils wirkt bei beiden beschriebenen Anwendungsbeispielen der Dämpfungskegel 18 schließschlagvermindernd. Wegen seiner kegeligen Ausbildung wird bei seinem Eintauchen in den Ventilsitz 22 während des Schließens die Durchflußmenge kontinuierlich verringert, wodurch wegen des zeitlich langsameren Abbaues der Strömungsgeschwindigkeit der Schließschlag geringer wird.

**Patentansprüche**

1. Elektromagnetisch vorgesteuertes Ventil mit einer, bei geschlossenem Ventil im wesentlichen ebenen, elastomeren Membran (26) als Stellglied und Schließorgan für den Ventilhauptsitz (22), die in einem Abstand von ihrem Rand zwischen von Gehäuseteilen gebildeten Kanten (28, 30) kippbar gehalten ist und auf deren dem Magnetantrieb zugewendeten, dem Ventilhauptsitz (22) abgewandten Seite ein Stützteller (33) angeordnet ist, dadurch gekennzeichnet, daß die ebene Membran (26) eine Randwulst (31) aufweist, daß diese Randwulst (31) auf der dem Ventilhauptsitz abgewandten Seite aus der Membran (26) — im Querschnitt einen Winkel bildend — einseitig herausragt und in einer zwischen einem Ventilgehäuse (21) und einem Ventilgehäusedeckel (23) gebildeten, von einem ringsum laufenden Deckelsteg (30) bis auf die Membrandicke mit Spiel verschlossenen Ringnut (25) ohne Flächenpressung aufgenommen ist, wobei der Deckelsteg (30) und die ihm gegenüberliegende Ringnutkante (28) im Zusammenwirken mit Randbereichen der unter Krafteinwirkung nach der einen oder anderen Seite hin ausgebogenen Membran (26) als Dichtkanten (28, 30) benutzt sind, daß der Außendurchmesser der Ringnut (25) um einen gegenüber dem Außendurchmesser der Randwulst (31) der Membran (26) einen Abstandsspalt ergebenden Betrag größer ist, als der letztere; daß der Innendurchmesser der Randwulst (31) bei gestreckter Membran (26) um einen Arbeitsweg größer ist, als der Außendurchmesser des Deckelstegs (30) und daß der Boden (Schulterfläche 27) der Ringnut (25) unter einem spitzen Winkel ($x$) nach außen geneigt ist.

2. Ventil nach Anspruch 1, dadurch gekennzeichnet, daß der Boden (Schulterfläche 27) der Ringnut (25) durch eine an der Vorderkante (28) abgerundete Ausnehmung des Ventilgehäuses (21) gebildet ist, sowie dadurch, daß in diese Ausnehmung ein Ansatz (29) des Ventilgehäusedeckels (23) eingesetzt ist, der mit dem an seinem Ende ebenfalls abgerundeten Deckelsteg (30) zusammen ein im Querschnitt rechtwinkliges Profil bildet.

3. Ventil nach Anspruch 1 und 2, dadurch gekennzeichnet, daß in den Stützteller (33) eine Warze (34) der Membran (26) eingreift.

4. Ventil nach Anspruch 1 oder einem der folgenden, dadurch gekennzeichnet, daß die Membran (26) auf der Schließseite (Unterseite) mit einem Dämpfungskegel (18) ausgerüstet ist.

5. Ventil nach Anspruch 4, dadurch gekennzeichnet, daß die Membran (26) und ihren Stützteller (33) durchquerende Vorsteuerbohrungen (35, 36) dicht an den den Dämpfungskegel (8) aufnehmenden Ventilsitz (22) gelegt sind.

6. Ventil nach Anspruch 1 oder einem der folgenden, gekennzeichnet durch die Verwendung einer durch Aufvulkanisieren einer Gewebebahn auf den gummielastischen Werkstoff erhaltenen gewebeverstärkten Membran (26).

7. Ventil nach Anspruch 1−4 oder einem der folgenden, dadurch gekennzeichnet, daß die Membran (26), ihr Stützteller (33) und ihr Dämpfungskegel (18) durch einen zentralen Nietbolzen (12) zu einer Einheit zusammengefaßt sind, wobei der Nietbolzen ggf. von einem in axialer Richtung verlaufenden zentralen Vorsteuerkanal (13) durchquert ist.

## Claims

1. Electromagnetically biased valve having an elastomeric diaphragm as the adjustment element and closure member for the main valve seat (22), which diaphragm, in the case of a closed valve, is essentially plane and which is tiltably held, at a location spaced from its edge, between edges (28, 30) formed by housing parts, a support plate (33) being arranged on the side of the diaphragm directed towards the magnetic drive and away from the main valve seat (22), characterized in that the plane diaphragm (26) has a beaded edge (31), that this beaded edge (31) projects on one side from the plane diaphragm (26) — forming an angle in cross-section — and is received without surface pressure in an annular groove (25) formed between a valve housing (21) and a valve housing cover (23) and which is closed with clearance and except for the diaphragm thickness by an encircling cover rib (30), the cover rib (30) and the annular groove edge (28) lying opposite to it are used as sealing edges (28, 30) in cooperation with border areas of the diaphragm (26) which is deflected towards one side or the other under the action of force, in that the outer diameter of the annular groove (25) is greater, by an amount producing a spacing gap with respect to the outer diameter of the beaded edge (31) of the diaphragm (26), than the latter, in that the inner diameter of the beaded edge (31), in the stretched state of the diaphragm (26), exceeds the outer diameter of the cover rib (30) by an operating gap, and in that the base (shoulder surface 27) of the annular groove (25) is outwardly inclined at an acute angle $(\alpha)$.

2. A valve as claimed in claim 1, characterized in that the base (shoulder surface 27) of the annular groove (25) is formed by a recess of the valve housing (21) rounded at the forward edge (28) and in that in this recess there is inserted a lug (29) of the valve housing cover (23) which forms together with the cover rib (30) which is also rounded on its end, a profile which is rightangled in cross-section.

3. A valve as claimed in claims 1 and 2, characterized in that a projection (34) of the diaphragm (26) engages in the support plate (33).

4. A valve as claimed in claim 1 or one of the following claims, characterized in that the diaphragm (26) is provided on the closure side (lower side) with a damping cone (18).

5. A valve as claimed in claim 4, characterized in that biasing bores (35, 36) traversing the diaphragm (26) and its support plate (33) are disposed close to the valve seat (22) receiving the damping cone (18).

6. A valve as claimed in claim 1 or one of the following claims, characterized by the use of a tissue-reinforced diaphragm (26) obtained by vulcanization of a web of textile on the resilient rubber material.

7. A valve as claimed in claims 1 to 4 or one of the following claims, characterized in that diaphragm (26), its support plate (33) and its damping cone (18) are combined into a unit by a central rivet pin (12), wherein the rivet pin is possibly traversed by a central biasing channel (13) extending in the axial direction.

## Revendications

1. Soupape électromagnétique à commande préalable comportant, en tant qu'élément de manœuvre et organe de fermeture pour le siège de soupape principal (22), une membrane en élastomère (26), sensiblement plane, qui est maintenue, de manière à pouvoir basculer, à une certaine distance de son bord entre des arêtes (23, 30) formées par des parties du corps de soupape et qui comporte, sur le côté de la membrane en regard de la commande magnétique et à l'opposé du siège de soupape principal (22), un plateau d'appui (33), caractérisée en ce que la membrane plane (26) comporte un bourrelet périphérique (31), en ce que ce bourrelet périphérique (31) fait saillie d'un seul côté de la membrane (26), du côté situé à l'opposé du siège de soupape principal, en formant un angle vu en coupe, et est logé sans être comprimé dans une rainure annulaire (25) qui est délimintée par un corps de soupape (21) et un couvercle (23) et obturée par une nervure annulaire (30) du couvercle de manière à laisser subsister un jeu entre elle et la membrane, la nervure (30) du couvercle et le bord (28) de la rainure annulaire qui lui fait face servant d'arêtes d'étanchéité (28, 30) en coopération avec les zones périphériques de la membrane (26) incurvée vers l'un ou vers l'autre côté sous l'action des forces, en ce que le diamètre extérieur de la rainure annulaire (25) est supérieur au diamètre extérieur du bourrelet périphérique (31) de la membrane (26) d'une quantité suffisante, pour créer un intervalle, en ce que lorsque la membrane est tendue, le diamètre intérieur du bourrelet périphérique (31) est supérieur d'un trajet de travail au diamètre extérieur de la nervure (30) du couvercle et en ce que le fond (suface d'épaulement 27) de la rainure annulaire (25) est incliné vers l'extérieur sous un angle aigu $(\alpha)$.

2. Soupape selon la revendication 1, caractérisée en ce que le fond (surface d'épaulement 27) de la rainure annulaire (25) est formé par un évidement à bord avant arrondi (28) du corps de soupape (21) ainsi que par le fait qu'une saillie (29) du couvercle (23) est engagée dans ce évidement, ce couvercle délimitant, par sa nervure (30) dont l'extrémité est également arrondie, un profil à angle droit.

3. Soupape selon l'une des revendications 1 ou 2, caractérisée en ce qu'un bouton (34) de la membrane (26) s'engage dans le plateau d'appui (33).

4. Soupape selon l'une des revendications 1 à 3, caractérisée en ce que la membrane (26) présente, sur le côté de fermeture (côté inférieur), un cône d'amortissement (18).

5. Soupape selon la revendication 4, caractérisée en ce que la membrane (26) et les alésages de commande préalable (35, 36) qui traversent le plateau d'appui (33) de la membrane se trouvent à proximité du siège de soupape (22) pour le cône d'amortissement (18).

6. Soupape selon l'une des revendications 1 à 5, caractérisée par l'utilisation d'une membrane renforcée (26) réalisée en rapportant par vulcanisation une matière textile sur la matière caoutchouteuse.

7. Soupape selon l'une des revendications 1 à 4, caractérisée en ce que la membrane (26), son plateau d'appui (33) et son cône d'amortissement (18) sont assemblés pour former une unité à l'aide d'un rivet (12) traversé éventuellement par un canal de commande préalable central (13) s'étendant dans le sens axial.

FIG. 1

FIG. 2

FIG. 3

FIG. 4

FIG.5

FIG. 6